# EUROPÄISCHE PATENTSCHRIFT

(11) **EP 1 529 173 B1**
(45) Veröffentlichungstag und Bekanntmachung des Hinweises auf die Patenterteilung: **08.04.2009**
(21) Anmeldenummer: 03787775.0
(22) Anmeldetag: 12.08.2003
(51) Int. Cl.: F16F 9/504

(54) **STEUERBARES KOLBENVENTIL UND/ODER BODENVENTIL FÜR EINEN SCHWINGUNGSDÄMPFER**
CONTROLLABLE PISTON VALVE AND/OR FLAP VALVE FOR A VIBRATION DAMPER
SOUPAPE A PISTON ET/OU SOUPAPE D'ADMISSION COMMANDABLE DESTINEE A UN AMORTISSEUR D'OSCILLATIONS

(30) Priorität: 13.08.2002 DE 10236963
(43) Veröffentlichungstag der Anmeldung: 11.05.2005
(73) Patentinhaber: Tuhh Technologies GmbH, 21079 Hamburg (DE)
(72) Erfinder: FISCHER, Jürgen, 25421 Pinneberg (DE)
(74) Vertreter: Hauck Patent- und Rechtsanwälte
(86) Internationale Anmeldenummer: PCT/EP2003/008953
(87) Internationale Veröffentlichungsnummer: WO 2004/016967

(56) Entgegenhaltungen:
- DE-A- 1 555 382
- DE-A- 2 710 440
- DE-A- 3 823 043
- DE-A- 3 939 485
- GB-A- 1 599 833
- REIMPELL J.: 'Fahrwerkstechnik: Grundlagen', 1988, VOGEL BUCHVERLAG WÜRZBURG * Seite 288, Absatz 5.6.2 - Seite 306 *

## Beschreibung

Die Erfindung bezieht sich auf ein steuerbares Kolbenventil und/oder ein steuerbares Bodenventil nach den Patentansprüchen 1, 2 und 5.

Wenn nachstehend von einem Kolbenventil gesprochen wird, dann ist sowohl eine Ventilanordnung im Kolben eines Schwingungsdämpfers in Kolbenzylinderbauweise gemeint als auch ein externes Ventil, das Kolben- und Ringraum der Kolbenzylinderanordnung wahlweise miteinander verbindet.

Schwingungsdämpfer, insbesondere für Automobile, bestehen bekanntlich aus der parallelen oder Serienanordnung eines Dämpfungsgliedes und einer Feder. Bei Dämpfungsgliedern in Form einer Kolbenzylinderanordnung unterscheidet man generell zwischen Einrohr- und Zweirohrdämpfern. Bei Einrohrdämpfern ist im Kolben der Kolbenzylinderanordnung eine Ventilanordnung vorgesehen, die in beiden Richtungen den Durchgang des Mediums drosselt und im Kolbenraum ein separates Speichervolumen angeordnet, das im Druckbetrieb des Schwingungsdämpfers komprimiert wird. Bei einem Zweirohrdämpfer wird ein Speichervolumen im Zwischenraum zwischen einem Innen- und einem Außenraum gebildet, und die Verbindung zwischen diesen Räumen erfolgt über ein sogenanntes Bodenventil. Das Bodenventil wirkt z.B. im Druckbetrieb, indem es gedrosselt die Einströmung des Dämpfungsmediums in den Speicher zuläßt, während im Zugbetrieb z.B. ein widerstandsarmes Einströmen vom Speicher in den Kolbenraum und eine Drosselung in einer Ventilanordnung im Kolben der Kolbendämpferanordnung erfolgt. Ein Bodenventil wird auch verwendet bei einem Dämpfungsglied in einer Plungerzylinderanordnung, bei der das Dämpfungsmedium über ein Bodenventil im Druckbetrieb in einen externen Speicher gedrückt wird, während es im Zugbetrieb aus dem externen Speicher über das Bodenventil in den Plungerraum zurückströmt. Statt eines Plungers kann auch ein Kolben verwendet werden, dessen Ringseite zur Atmosphäre hin offen ist.

Bei Automobilen bestimmt das Dämpfungsverhalten der Schwingungsdämpfer sowohl den Fahrkomfort als auch die Sicherheit, insbesondere bei Kurvenfahrten. Zwischen beiden angestrebten Eigenschaften besteht jedoch ein Konflikt. Wird der Schwingungsdämpfer für maximale Sicherheit ausgelegt, leidet der Komfort, weil der Schwingungsdämpfer hart reagiert. Wird hingegen der Komfort bevorzugt, leidet wegen eines weichen Dämpfungsverhaltens die Sicherheit. Es ist daher Aufgabe des Konstrukteurs, die Kennlinie eines Schwingungsdämpfers so auszulegen, daß im Hinblick auf Sicherheit und Fahrkomfort ein Kompromiß erreicht wird.

Es ist bekannt, Kolbenventile und/oder Bodenventile von Schwingungsdämpfern so auszulegen, daß ihr Durchströmquerschnitt während des Betriebs verändert werden kann. In diesem Zusammenhang ist auch bekannt, den Durchströmquerschnitt nach Maßgabe des Druckverhältnisses zwischen Kolben- und Ringraum zu steuern. Ein Schwingungsdämpfer hat bekanntlich die Aufgabe, der Beschleunigung einer Masse, etwa beim Fahrzeug des Fahrzeugaufbaus, entgegenzuwirken. Eine Steuerung des Durchströmquerschnitts in Abhängigkeit von der Druckdifferenz in einer Kolbenzylinderanordnung wird dieser Forderung jedoch nur teilweise gerecht, weil sie die Wirkung der Federkraft unberücksichtigt läßt.

Es ist auch bekannt, das jeweilige Verhalten, insbesondere die Beschleunigung eines Fahrzeugs in vertikaler oder auch in Querrichtung mit Hilfe von Sensoren zu messen und daraus Steuersignale für die Schwingungsdämpfer abzuleiten, um Fahrkomfort und Sicherheit zu optimieren. Derartige Schwingungsdämpfer bzw. die hierzu erforderlichen Steuerkomponenten sind jedoch außerordentlich aufwendig und auch störanfällig. Außerdem hat eine derartige Steuerung eine relativ geringe Eigenfrequenz.

Der geschilderte Stand der Technik geht etwa aus J. Reimpell Fahrwerkstechnik: Grundlagen, Würzburg: Vogel-Verlag 1988 hervor.

Der Erfindung liegt daher die Aufgabe zugrunde, ein Kolbenventil bzw. ein Bodenventil für einen Schwingungsdämpfer zu schaffen, dessen Durchströmquerschnitt auf einfache Weise abhängig von der Beschleunigung der Masse geändert werden kann.

Diese Aufgabe wird durch die Merkmale der Patentansprüche 1, 2 und 5 gelöst.

Bei dem Kolbenventil nach Patentanspruch 1 wird ein den Durchströmquerschnitt steuerndes Kolbenventilglied von einem als Differentialkolben ausgebildeten Steuerkolben betätigt, dessen entgegengesetzte Wirkflächen mit dem Differenzdruck von Kolben- und Ringraum des Zylinders beaufschlagt werden. Der Steuerkolben wird außerdem entgegen der größeren Wirkfläche zusätzlich mit dem Druck einer Druckquelle (Ausgleichsdruckquelle) belastet, die von der Kombination eines fluidischen Widerstands und einer fluidischen Kapazität gebildet und die vom Druck im Kolben- oder Ringraum des Zylinders gespeist ist. Mag die Erfindung in erster Linie auch in hydraulischer Anwendung bevorzugt sein, ist die gasförmige Anwendung nichtsdestoweniger sinnvoll und praktikabel. Daher wird häufig der Oberbegriff "Fluid" bzw. "fluidisch" verwendet, um beide Anwendungsformen abzudecken.

Das beschriebene Kolbenventil wird in beiden Richtungen mit einem Steuerkolben gesteuert. Anstelle eines Stufenkolbens können zwei Steuerkolben mit je zwei Wirkflächen verwendet werden, die jeweils ein Ventilglied betätigen. Es ist auch möglich, für jede Durchströmrichtung jeweils ein Ventilglied vorzusehen, das jeweils von einem Differential-Steuerkolben betätigt wird.

Alternativ kann parallel zum beschriebenen ersten Kolbenventilglied ein zweites Kolbenventilglied angeordnet sein, das ebenfalls von einem Differentialkolben betätigt werden kann mit entgegengesetzt gerichteten Wirkflächen. Hierbei wird die Strömung des Dämpfungsmediums in zwei Ströme aufgeteilt, wobei ein Durchströmquerschnitt die Druckdifferenz am Kolben des Schwingungsdämpfers berücksichtigt und der andere die Feder abbildet.

Wenn vor- und nachstehend von Kolbenventil oder Kolbenventilschieber gesprochen wird, soll dies auch Ventile und Schieber einschließen, die mit andersartigen Ventilgliedern und Betätigungen arbeiten, z.B. Drehschieber.

Nach einer Ausgestaltung der Erfindung kann das erfindungsgemäße Ventil von einem Zweiwegeventil mit einem einteiligen Ventilschieber gebildet sein, der zwei Steuerflächen oder -kanten aufweist, wobei der Kolbenventilschieber zusätzlich von dem Druck der Ausgleichsdruckquelle beaufschlagt ist. Der einteilige Ventilschieber kann für eine Durchströmung in beiden Richtungen auch durch zwei einzelne Ventilschieber ersetzt werden. Zur Betätigung können glatte zylindrische Steuerkolben verwendet werden, wobei die Wirkflächen eines Steuerkolbens mit dem Kolben- bzw. dem Ringraum verbunden sind. Die Wirkflächen des anderen Steuerkolbens sind mit dem Kolbenraum und der Ausgleichsdruckquelle verbunden. Dabei entspricht die Wirkung des ersten Ventilglieds auf den Durchströmquerschnitt der Dämpferkraft und die des zweiten der Federkraft. Diese Ausführung ist wegen der einfachen Kolben bzw. Schieber technisch besonders unaufwendig.

Erfindungswesentlich ist, daß mit einem derartigen Kolbenventil der Durchströmquerschnitt in Abhängigkeit von der jeweiligen Massebeschleunigung gesteuert wird. Die beschriebenen Wirkflächen am Steuerkolben sind daher derart zu bemessen, daß die Dämpferkraft des Dämpfungsgliedes einerseits und die Federkraft der Dämpferfederanordnung andererseits entsprechend berücksichtigt sind.

Da die Ventilglieder bzw. das einteilige Ventilglied des erfindungsgemäßen Kolbenventils sehr klein bauen können und eine geringe Masse haben, ist es möglich, mit der erfindungsgemäßen Steuerung des Durchströmquerschnitts sehr hohe Frequenzen zu realisieren. Dies im Gegensatz zu elektronischen Lösungen, welche mit kleineren Frequenzbereichen zu arbeiten gezwungen sind.

Die aus der fluidischen Kapazität und dem fluidischen Widerstand gebildete Druckquelle stellt eine Art Siebglied dar, das Druckschwankungen des zufließenden oder abfließenden Ölstroms glättet bzw. verringert. Zur Realisierung kann als fluidischer Widerstand eine kleine Blende vorgesehen werden und als fluidische Kapazität ein Druckspeicher, der z.B. durch eine Membran von einem Druckluftvolumen getrennt ist.

Das steuerbare Bodenventil nach Patentanspruch 5 weist ein den Durchströmquerschnitt steuerndes Bodenventilglied auf, das von einem als Stufenkolben ausgebildeten Steuerkolben betätigt wird. Der Stufenkolben weist eine erste Wirkfläche auf, die mit dem Druck des Kolbenraums oder des Plungerraums der Kolbenzylinderanordnung beaufschlagt ist. Eine zweite Wirkfläche, welche mit der ersten gleichgerichtet ist, wird mit dem Druck des Speichers beaufschlagt, der über das Bodenventil vom Kolbenraum aus mit dem Dämpfungsmedium gespeist wird. Eine dritte, der ersten und zweiten Wirkfläche entgegengesetzte Wirkfläche wird wiederum mit dem Druck einer Ausgleichsdruckquelle beaufschlagt, die von der Kombination eines fluidischen Widerstands und einer fluidischen Kapazität gebildet ist. Diese Ausgleichsdruckquelle wird gespeist entweder vom Druck im Kolbenraum oder vom Druck des Speichers.

Zu dem Bodenventil nach den obigen Merkmalen gilt das gleiche, was bereits zum Kolbenventil ausgeführt würde. Es ist in der Lage, den Durchströmquerschnitt nach Maßgabe der Massebeschleunigung einzustellen. Die Auslegung der Wirkflächen berücksichtigt den Einfluß der Dämpferfeder und des Dämpfungsgliedes in Form der Kolbenzylinder- oder der Plungeranordnung.

Mit Hilfe des beschriebenen Bodenventils läßt sich in einer Richtung eine beschleunigungsabhängiger Drosselung des Dämpfungsmediums vornehmen. In der entgegengesetzten Richtung kann ein herkömmliches Ventil verwendet werden oder auch ein Rückschlagventil je nachdem, wie das Kolbenventil ausgeführt wird, worauf weiter unten noch eingegangen wird. Es kann jedoch zweckmäßig sein, das Bodenventil mit einem einteiligen Ventilschieber auszustatten, der zwei Steuerflächen oder -kanten aufweist für die Steuerung des Durchströmquerschnitts in beiden Strömungsrichtungen. Es versteht sich, daß eine derartige Ventilanordnung auch aufgeteilt werden kann, indem zwei Steuerventilglieder durch jeweils einen getrennten Stufenkolben betätigt werden, wobei jedes Ventilglied zusätzlich mit dem Ausgleichsdruck der zusätzlichen Druckquelle belastet wird.

Wie schon erwähnt, ist bei einem Einrohrstoßdämpfer zweckmäßig, beide Strömungswege für Druck- und Zugbetrieb in der erfindungsgemäßen Weise zu drosseln. Bei einem Zweirohrdämpfer müssen sowohl im Kolben als auch im Bodenventil beide Durchströmrichtungen zugelassen sein. Daher ist denkbar, für z.B. den Druckbetrieb das Bodenventil in erfindungsgemäßer Weise auszuführen und für den Zugbetrieb ein Rückschlag- oder Sperrventil vorzusehen, das im Zugbetrieb öffnet. Für diesen Fall ist dann das Kolbenventil erfindungsgemäß ausgeführt, während es für den Druckbetrieb ein herkömmliches Rückschlag- oder Sperrventil vorsieht, das im Druckbetrieb öffnet. Ferner ist möglich, eine beschleunigungsabhängige Drosselung des Durchströmquerschnitts und damit der Dämpfung bei einem Zweirohrdämpfer allein im Kolben vorzusehen, während das Bodenventil als herkömmliches Ventil, z.B. Plattenventil ausgeführt ist, das seinen Durchströmquerschnitt in Abhängigkeit von der Druckdifferenz von Kolben- und Speichervolumen des Ringraums einstellt. Schließlich ist bei Zweirohrdämpfern auch denkbar, im Zug- und/oder Druckbetrieb jeweils das Kolbenventil und das Bodenventil in erfindungsgemäßer Weise auszuführen und somit die Dämpfung für beide Richtungen auf beide Ventile aufzuteilen. So kann z.B. eine Aufteilung im Verhältnis von 80:20 erfolgen, wobei die größere Dämpfung im Kolbenventil stattfindet. Bei einer derartigen Ausführung wird jedoch ein widerstandsarmes Rückströmen im Kolbenventil oder im Bodenventil naturgemäß nicht erreicht.

Schließlich ist auch denkbar, den gedrosselten Mengenstrom im Kolbenventil aufzuteilen und über getrennte Ventile zu führen, bevor der Mediumstrom wieder vereinigt wird. Dies kann mit Hilfe von Steuerventilen erreicht werden, auf deren Ventilglieder eine Differenzkraft aufgebracht wird, die zum einen aus dem Differenzdruck von Kolbenraum und Ringraum der Kolbenzylinderanordnung gebildet ist und zum anderen aus dem Differenzdruck von Kolbenraum und zusätzlicher Ausgleichsdruckquelle. Eine solche Aufteilung hätte den Vorteil, daß die Ventilglieder kleiner bauen und daher möglicherweise besser im Dämpferkolben unterzubringen sind.

Der Strömungsquerschnitt des fluidischen Widerstands ist nach einer Ausgestaltung der Erfindung veränderbar. Die Veränderung kann z.B. in Abhängigkeit davon erfolgen, ob die Dämpferanordnung sich im Druck- oder Zugbetrieb befindet. Im Zugbetrieb wird z.B. eine andere Dämpfung verlangt als im Druckbetrieb. Es ist aber auch denkbar, den Durchströmquerschnitt nach Maßgabe des Lenkwinkels und/oder der Bremspedalbetätigung bei einem Fahrzeug zu steuern.

Eine Veränderung des Durchströmquerschnitts kann z.B. mit Hilfe eines Magnetventils erfolgen, das vorzugsweise einer konstanten Drossel parallel geschaltet ist. Ein Magnetventil erfordert jedoch eine elektrische Leitung, die gegebenenfalls in das Innere der Kolbenzylinderanordnung des Dämpfers geführt werden muß.

Ausführungsbeispiele der Erfindung sollen nachfolgend anhand von Zeichnungen näher erläutert werden.
- Fig. 1: zeigt schematisch ein Schaltungsbeispiel eines Kolbenventils nach der Erfindung.
- Fig. 2: zeigt eine andere Ausführungsform eines Kolbenventils nach der Erfindung für nur eine Strömungsrichtung.
- Fig. 2a: zeigt eine alternative Ausführungsform zu Fig. 2.
- Fig. 3: zeigt schematisch die Schaltung für ein Bodenventil nach der Erfindung.
- Fig. 4: zeigt eine andere Ausführungsform eines Bodenventils nach der Erfindung für nur eine Strömungsrichtung.
- Fig. 5: zeigt eine beschleunigungsproportionale Verstellung eines Ventils mit einem Stufenkolben für ein Kolbenventil.
- Fig. 6: zeigt äußerst schematisch die Aufteilung eines Stufenkolbens in zwei separate glatte Kolben.
- Fig. 7: zeigt schematisch die Kombination eines hydraulischen Widerstands und einer hydraulischen Kapazität für die Ventile der Fign. 1 bis 4.
- Fig. 8: zeigt ein Konfliktdiagramm von zwei Dämpferkennlinien.
- Fig. 9: zeigt im Schnitt einen Zweirohrdämpfer mit einer Ventilanordnung nach der Erfindung.
- Fig. 10: zeig ein Schaltbild nach der Erfindung für einen Zweirohrdämpfer.

Alle beschriebenen Ausführungsformen zeigen eine hydraulische Anwendung. Die Erfindung ist darauf nicht beschränkt.

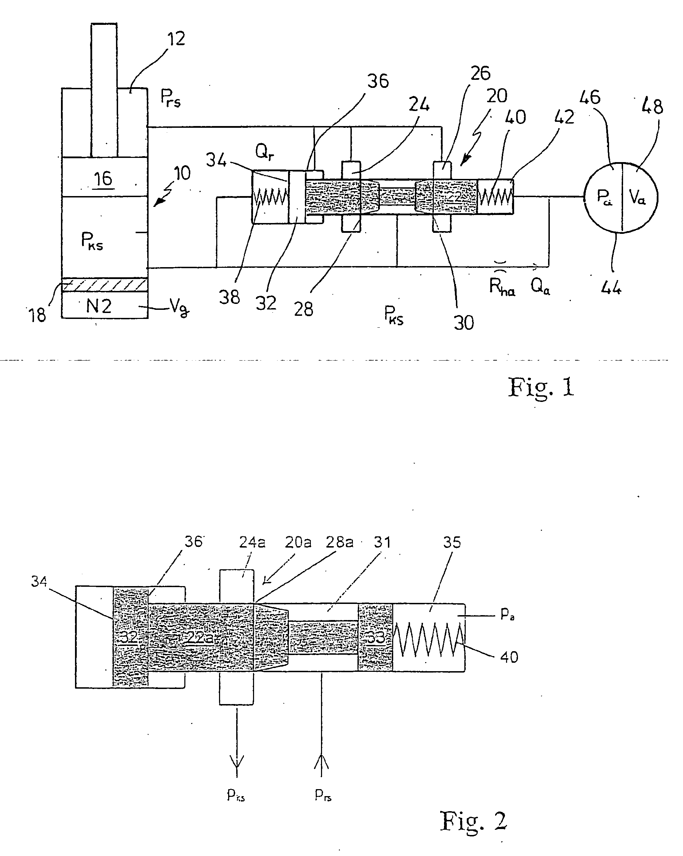

Fig. 1 zeigt schematisch einen Einrohrschwingungsdämpfer 10 mit einem Ringraum 12 und einem Kolbenraum 14, welche durch einen Kolben 16 voneinander getrennt sind. Ein weiterer frei schwimmender Kolben 18 trennt den Kolbenraum 14 von einem Speichervolumen V_{g}, in dem sich z.B. Stickstoff unter einem vorgegebenen Druck befindet. Eine derartige Anordnung ist allgemein bekannt. In Fig. 1 ist ferner ein Zweiwegeventil 20 zu erkennen, von dem in erster Linie ein einteiliger Ventilschieber 22 dargestellt ist. Zwei beabstandete Ringnuten 24, 26 des nicht näher dargestellten Ventilgehäuses sind ständig mit dem Ringraum verbunden. Mit den Nuten 24, 26 wirken Steuerkanten 28, 30 des Ventilschiebers 22 zusammen. Im eingeschnürten Bereich des Ventilschiebers 20 ist eine Verbindung zum Kolbenraum 14 hergestellt. Ein Steuerkolben 32 in Form eines Stufenkolbens ist mit dem Ventilschieber 22 verbunden. Seine größere Wirkfläche 34 wird vom Druck des Kolbenraums 14 beaufschlagt. Eine kleinere Wirkfläche 36 wird vom Druck des Ringraumes 12 beaufschlagt. Auf den Steuerkolben 32 wirkt eine Feder 38 und auf das rechte Ende des Ventilschiebers wirkt eine Feder 40. Die Federn 38, 40 sind so ausgelegt, daß der Ventilschieber bei statischem Gleichgewicht am Schwingungsdämper 10 in der gezeigten Neutralstellung ist.

Mit einem rechten Ventilraum 42 des Zweiwegeventils 20 ist ein Druckausgleichsspeicher 44 verbunden. Ein erster Speicherraum 46 ist durch eine Membran von einem zweiten Speicherraum 48 getrennt. Im letzteren befindet sich ein Gasvolumen unter Druck. Der Speicherraum 46 ist mit dem Ventilraum 42 verbunden und wirkt auf die rechte Stirnfläche des Ventilschiebers 22. Mit der Verbindung zwischen Speichervolumen 46 und Ventilraum 42 ist der Kolbenraum 14 verbunden, und zwar über einen hydraulischen Widerstand Rₕₐ. Dieser hydraulische Widerstand zusammen mit dem Ausgleichsspeicher 44, der eine hydraulische Kapazität darstellt, bildet ein hydraulisches Siebglied.

Die üblicherweise bei einem Schwingungsdämpfer parallel angeordnete Dämpferfeder ist nicht dargestellt.

Im Druckstufenbetrieb wird der Kolbenraum 14 unter Druck gesetzt. Am Steuer- oder Stufenkolben, der als Differentialkolben ausgebildet ist, stellt sich ein Differenzdruck ein, der den Ventilschieber 22 nach rechts verstellt, so daß Medium aus dem Kolbenraum 14 in die Nut 26 und von dort in den Ringraum 12 fließen kann. Da das verdrängte Volumen größer ist als das, das der Ringraum 12 aufnehmen kann, erfolgt eine Volumenvergrößerung des Kolbenraums 14 durch Nachgeben des Speichervolumens V_{g}.

Einer Verstellung des Ventilschiebers 22 wirkt jedoch nicht nur der Druck im Ringraum 12 entgegen, sondern auch der Druck, der durch den Ausgleichsspeicher 44 aufgebaut wird und der abhängig ist vom Druck im Kolbenraum 14. Die Wirkflächen 34, 36 des Steuerkolbens 32 und die rechte Wirkfläche des Ventilschiebers 22 sind zusammen mit dem hydraulischen Siebglied so ausgelegt, daß sowohl die Dämpferkraft des Schwingungsdämpfers 10 als auch die Federkraft der nicht gezeigten Dämpferfeder berücksichtigt sind. Es ist daher möglich, den Durchströmquerschnitt durch das beschriebene Kolbenventil nach Maßgabe der Massebeschleunigung einzustellen und somit die Dämpfung abhängig von der Massebeschleunigung zu variieren. Für den Zugbetrieb erfolgt eine Verstellung des Ventilschiebers 22 nach links, so daß das Medium aus dem Ringraum über die Nut 24 und die Steuerkammer 28 in den Kolbenraum 14 gelangt.

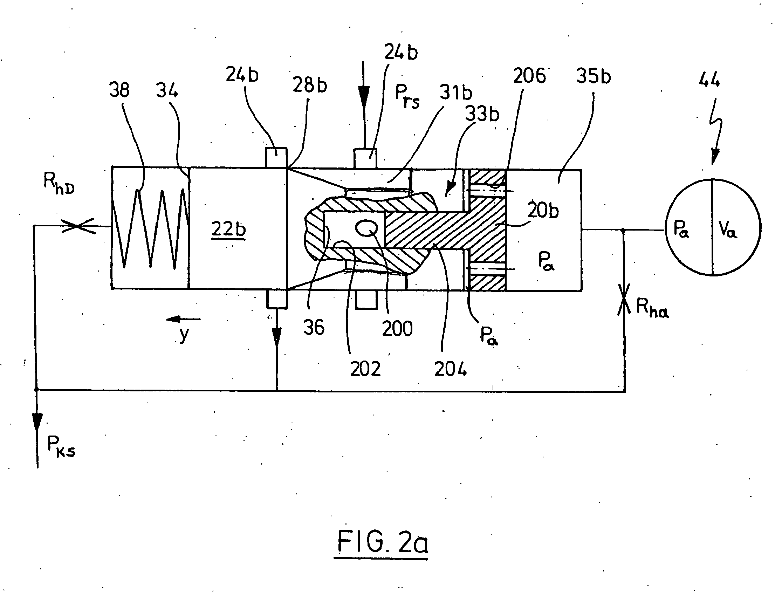

In Fig. 2 ist ein Kolbenventil 20a dargestellt, das teilweise ähnliche Komponenten wie das Kolbenventil 20 nach Fig. 1 aufweist. Daher werden gleiche Teile mit gleichen Bezugszeichen versehen.

Ein Ventilglied oder Ventilschieber 22a weist nur eine Steuerkante 28a auf, die mit einer Nut 24a zusammenwirkt. Die Nut 24a ist mit dem Kolbenraum des nicht gezeigten Schwingungsdämpfers verbunden, der wie der Schwingungsdämpfer 10 nach Fig. 1 ausgebildet sein kann. Ein Ventilraum 31 ist mit dem Ringraum des Schwingungsdämpfers verbunden. Ein mit dem Schieber 22a verbundener Kolben 33 dichtet einen Ventilraum 35 nach rechts ab, der von einer Feder 40 beaufschlagt ist und der in gleicher Weise mit einem Speichervolumen verbunden ist, wie dies in Fig. 1 dargestellt ist. Ein derartiges Kolbenventil 20a kann verwendet werden, um in der einen Strömungsrichtung im Schwingungsdämpfer eine beschleunigungsabhängige Dämpfung zu erzielen. In der anderen Richtung kann ein herkömmliches Ventil verwendet werden. Das Ventil 20a kann jedoch auch zweimal vorgesehen sein, indem das Ventil nach Fig. 1 in zwei Ventile aufgeteilt wird, von denen jedes in der beschriebenen Art und Weise betätigt wird. Bei einer Verstellung des Schwingungsdämpfers entgegengesetzt zur Darstellung nach Fig. 2, also im Druckbetrieb, müßte dann das entsprechende Ventilglied 22a in die entgegengesetzte Richtung verstellt werden, um ein Durchströmquerschnitt freizugeben.

Bei der Ausführungsform nach Fig. 2a wirkt eine Steuerkante 28b eines Ventilschiebers 22b mit einer Nut 24b zusammen. Die Nut 24b ist mit dem Kolbenraum des nicht gezeigten Schwingungsdämpfers nach Fig. 1 verbunden. Der Steuerschieber 22b bildet die Wirkfläche 34 (siehe Fig. 1 und 2), die einem Abschnitt einer durchgehenden Bohrung von gleichem Durchmesser zugekehrt ist und in der eine Feder 38 angeordnet ist. Ein weiterer Kolbenabschnitt 33b des Schiebers 22b hat eine Wirkfläche, die einem Bohrungsabschnitt 35b zugekehrt ist, der mit der Druckquelle 44 in Verbindung steht. Außerdem steht sie in Verbindung mit dem Kolbenraum des Schwingungsdämpfers 10 nach Fig. 1 über den hydraulischen Widerstand Rₕₐ. Ein Ventilraum 31b zwischen den Kolbenabschnitten des Schiebers 22b ist in Verbindung mit einer Ringnut 24b, die mit dem Ringraum des Schwingungsdämpfers 10 in Fig. 1 verbunden ist. Der Ventilraum 31b ist über Bohrungen, von denen eine bei 200 gezeigt ist, mit einer mittigen, inneren, axialen Bohrung 202 verbunden, in der sich ein Kolbenabschnitt 204 befindet, der den Bohrungsabschnitt auf der rechten Seite abdichtet. Dadurch ist die entgegengesetzt gerichtete zweite Wirkfläche 36 wirksam. Der Kolbenabschnitt 204 ist mit einer zylindrischen Scheibe 206 verbunden, die fest im Bohrungsabschnitt angebracht ist. Sie weist mehrere achsparallele Durchbohrungen 206 auf, damit der Druck Pₐ auf die rechte Wirkfläche des Kolbenabschnitts 33b wirken kann.

Die Kolbenanordnung nach Fig. 2a wirkt auch als Differentialsteuerkolben, ist jedoch glatt in der Bohrung angeordnet und daher einfacher zu fertigen. Der Steuerschieber 22b wirkt hier als dämpfend in Zugrichtung des nicht gezeigten Schwingungsdämpfers, wobei das Medium vom Ringraum 12 über die Drosselkante 28b in den Kolbenraum 14 fließt. Im übrigen ist die Wirkungsweise die gleiche, wie zu den Fig. 1 und 2 beschrieben.

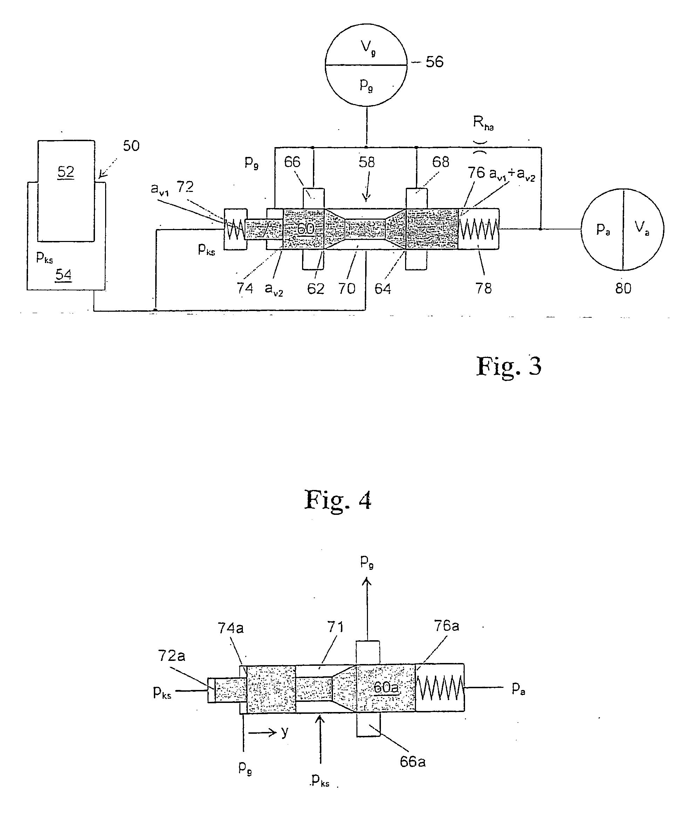

In Fig. 3 ist eine Plungerzylinderdämpferanordnung 50 schematisch dargestellt mit einem Plunger 52 und einem Zylinder 54. Bei Betätigung dieser Anordnung im Druckbetrieb wird das Medium aus dem Zylinder 54 in einen externen Speicher 56 gedrückt, und zwar über ein Bodenventil 58, das nachstehend beschrieben werden soll.

Das Bodenventil weist einen Ventilschieber 60 auf, der zwei Steuerkanten 62, 64 aufweist, die mit Ringnuten 66, 68 zusammenwirken. Die Ringnuten 66, 68 sind mit dem Speicher 56 verbunden, der, wie an sich bekannt, aus einem Speichervolumen V_{g} mit dem Druck P_{g} besteht. Im Speichervolumen V_{g} ist Speichergas unter einem vorgegebenen Druck eingeschlossen. Der Druck P_{g} ändert sich nach Maßgabe des Dämpferbetriebs. Der Ventilraum 70 zwischen den Steuerkanten 62, 64, der sich durch eine Einschnürung des Ventilschiebers 60 ergibt, ist mit dem Zylinderraum 54 verbunden.

Eine Steuerkolbenanordnung ergibt sich durch einen ersten Kolbenabschnitt 72, dessen Wirkfläche dem Druck im Zylinderraum 54 ausgesetzt ist. Eine zweite Wirkfläche 74, welche aus der Differenz des Kolbenabschnitts 72 und des linken Ventilschieberabschnitts gebildet ist, ist dem Druck P_{g} des Speichervolumens V_{g} ausgesetzt. Eine dritte Wirkfläche 76, die einem rechten Ventilraum 78 zugekehrt ist, ist dem Druck eines Druckausgleichsspeichers 80 ausgesetzt, der ein Speichervolumen Vₐ und einen Speicherdruck Pₐ aufweist, wobei das Speichervolumen Vₐ mit einem Gas unter vorgegebenen Druck gefüllt ist und das Volumen in Verbindung steht mit dem Speichervolumen V_{g}, und zwar über ein hydraulischen Widerstand Rₕₐ. Der Ventilschieber 60 ist von gegenüberliegenden Seiten durch Federn belastet, die den Ventilschieber 60 in der gezeigten neutralen Position halten.

Wird der Plunger 52 in den Zylinderraum 54 hinein bewegt, erhöht sich der Druck im Zylinderraum 54 und es erfolgt auf diese Weise eine Verstellung des Ventilschiebers nach rechts, so daß Medium aus dem Zylinderraum 54 in den Speicher 56 fließen kann. Das Ausmaß der Verstellung des Ventilschiebers 60 und damit der Durchströmquerschnitt hängt von den auf die Wirkflächen 72, 74 und 76 wirkenden Druckkräften ab. Die Wirkflächen sind so ausgelegt, daß eine Abhängigkeit des Strömungsquerschnitts von der Massebeschleunigung erhalten wird. Im umgekehrten oder Zugbetrieb wirkt der Druck im Speicher 56 auf die Wirkfläche 74 und die Wirkfläche 76, so daß Speicherdämpfermedium in den Zylinderraum 54 zurückströmen kann.

Auch hier ist eine beschleunigungsabhängige Einstellung des Durchströmquerschnitts in beiden Strömungsrichtungen gewährleistet.

Es versteht sich, daß statt eines Plungerzylinders, wie er in Fig. 3 dargestellt worden ist, auch ein Kolben vorgesehen werden kann, der mit dem Kolbenraum 54 zusammenwirkt, wobei jedoch der Ringraum mit Atmosphäre verbunden ist. Schließlich kann jedoch das in Fig. 3 dargestellte Wegeventil 58 für ein Bodenventil in einem Zweirohrdämpfer verwendet werden, was jedoch im einzelnen nicht dargelegt werden soll, da sich an der Wirkungsweise insoweit nichts ändert. Bei einem Bodenventil für einen Zweirohrdämpfer kann jedoch vorgesehen sein, daß z.B. nur im Druckbetrieb eine beschleunigungsabhängige Änderung des Durchströmquerschnitts erzielt werden soll, während im Zugstufenbetrieb im Kolben eine Ventilanordnung angeordnet ist, die in der bereits beschriebenen erfindungsgemäßen Weise arbeitet und eine Einstellung des Strömungsquerschnitts ebenfalls in Abhängigkeit von der Massenbeschleunigung gewährleistet. Schließlich ist, wie auch schon erwähnt, denkbar, sowohl im Zug- als auch im Druckstufenbetrieb jeweils im Kolben und im Bodenventil erfindungsgemäß zu dämpfen und eine Strömungsquerschnittseinstellung vorzunehmen, wie dies anhand der Fign. 1 bis 3 erläutert wurde.

Es ist auch möglich, den einteiligen Ventilschieber 60 in zwei Ventilschieber aufzuteilen, von denen einer bei 60a in Fig. 4 gezeigt ist. Der Ventilschieber 60a ist von einem Steuerkolben betätigt, der eine erste Wirkfläche 72a und eine zweite Wirkfläche 74a aufweist, die gleich wirkend sind. Die erste Wirkfläche 72a ist mit dem Druck Pₖₛ des Zylinderraums 54 gemäß Fig. 3 beaufschlagt. Die zweite Wirkfläche 74a ist mit dem Druck P_{g} des Speichers 56 nach Fig. 3 beaufschlagt. Die Ringnut 66a ist ebenfalls mit dem Speicher 56 verbunden, und der Ventilraum 71, der mit einer Einschnürung des Ventilschiebers 60a und des Steuerkolbens gebildet ist, ist mit dem Zylinderraum 54 verbunden. Die rechte Wirkfläche 76a des Ventilschiebers 60a ist mit dem Druck Pₐ des Ausgleichspeichers 80 nach Fig. 3 beaufschlagt. Auf diese Weise findet eine beschleunigungsabhängige Durchströmquerschnitteinstellung für eine Strömungsrichtung des Bodenventils statt. Mithin ist die Ventilanordnung nach Fig. 3 in zwei aufgeteilt, wobei in jeder Strömungsrichtung erfindungsgemäß gedämpft wird. Es ist aber auch denkbar, die Ventilanordnung nach Fig. 4 alleine für ein Bodenventil in einem Zweirohrschwingungsdämpfer einzusetzen, während für die andere Strömungsrichtung z.B. ein Rückschlagventil vorgesehen ist. Für diesen Fall ist dann für die andere Betätigungsrichtung eine Drosselung des Dämpfungsmediums im Kolben des Zweirohrschwingungsdämpfers erforderlich, z.B. mit einem Ventil nach Fig. 1 oder Fig. 2 für eine oder beide Strömungsrichtungen mit einem Sperr- oder Rückschlagventil für Strömungsrichtungen.

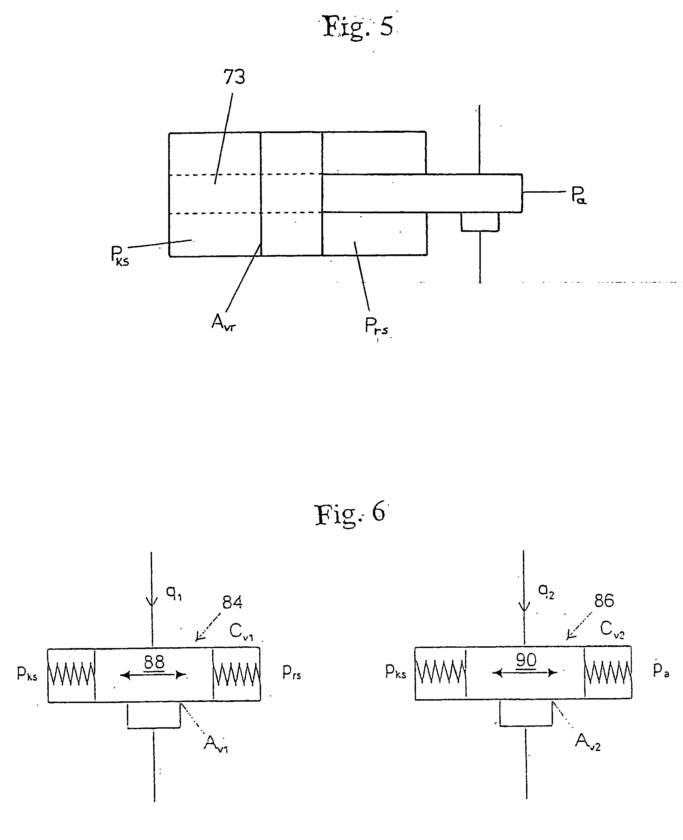

In Fig. 5 soll lediglich schematisch angedeutet werden, daß eine Dämpfung in einem Kolbenventil nach dem Prinzip der Fign. 1 und 2 mittels eines Stufenkolbens, in beiden Verstelllrichtungen nach Maßgabe des Verstellweges erfolgen kann. Der Verstellweg ist, wie oben schon beschrieben, von der Massebeschleunigung abhängig. Durch die gestrichelte Linie in Fig. 5 soll bei 73 angedeutet werden, daß statt des Stufenkolbens, wie er z.B. in Fig. 1 dargestellt ist, zwei glatte Kolben verwendet werden können wie sie in Fig. 6 gezeigt sind. Dies gilt für die Betätigung des Bodenventils.

In Fig. 6 soll äußerst schematisch angedeutet werden, wie die Ströme z.B. durch ein Kolbenventil bei der Verstellung des Dämpferkolbens aufgeteilt werden können. Die Aufteilung erfolgt über zwei Strömungswege mit den Strömungsmengen q1 und q2, die durch ein Ventil 84 bzw. 86 geleitet werden mit Ventilschiebern 88, 90, wobei der Ventilschieber 88 auf der einen Seite vom Druck Pₖₛ und auf der anderen Seite vom Druck Pᵣₛ beaufschlagt wird, d.h. von der Druckdifferenz am Dämpferkolben. Der Durchströmquerschnitt Aᵥ₁ stellt sich nach Maßgabe der Verstellung des Ventilschiebers 88 ein. Der Ventilschieber 90 des Ventils 86 wird durch den Druck Pₖₛ und den Druck Pₐ gegensinnig beaufschlagt. Pₖₛ ist bekanntlich der Druck im Kolbenraum und Pₐ der Ausgleichsdruck etwa des Speichers 44 nach Fig. 1. Der Strömungsquerschnitt Aᵥ₂ ergibt sich aus der Differenz der auf das Ventilglied 90 aufgebrachte Drücke. Die Auslegung des Ventils 86 ist derart, daß die Wirkungsweise der Feder (Aufbaufeder) abgebildet ist. Eine Ventilanordnung, wie sie in Fig. 6 angedeutet ist, hat unter Umständen den Vorteil, sehr klein zu bauen und ist daher relativ leicht im Dämpferkolben unterzubringen. Wird der Ventilschieber 90 blockiert, arbeitet die Ventilanordnung wie bei einem herkömmlichen Schwingungsdämpfer.

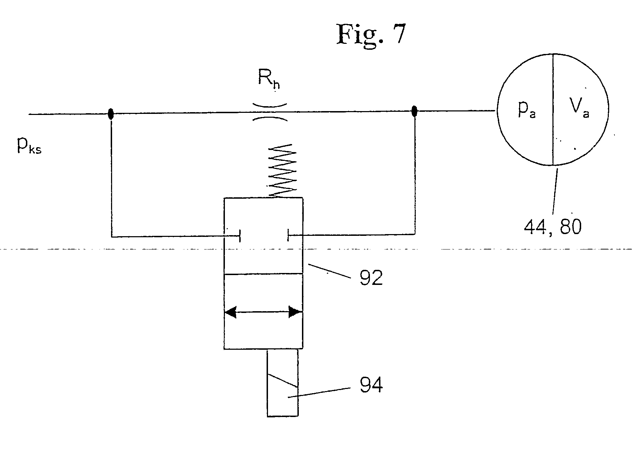

In Fig. 7 ist der Ausgleichsdruckspeicher 44 bzw. 80 nach den Fign. 1 bzw. 3 wiedergegeben. Er ist mit dem Kolbenraum eines Schwingungsdämpfers nach der Zylinderkolbenanordnung oder auch mit dem Zylinderraum 54 nach Fig. 3 über eine Blende Rₕ konstanten Querschnitts verbunden. Parallel zur Blende Rₕ ist ein steuerbares Rückschlagventil 92 geschaltet, das von einem Elektromagneten 94 gesteuert wird. Nach Maßgabe der Ansteuerung des Elektromagneten 94 fließt mehr oder weniger Dämpfermedium über das Rückschlagventil 92 und verändert mithin den hydraulischen Widerstand, der durch die Parallelschaltung aus der Blende Rₕ und dem Ventil 92 gebildet ist. Das Steuersignal für den Elektromagneten kann in Abhängigkeit verschiedener Parameter gebildet werden, beispielsweise in Abhängigkeit davon, ob der Schwingungsdämpfer im Zugstufen- bzw. Druckstufenbetrieb betrieben wird oder auch in Abhängigkeit vom Lenkeinschlag und/oder der Bremspedalbetätigung des Fahrzeugs, das mit dem Schwingungsdämpfer ausgestattet ist.

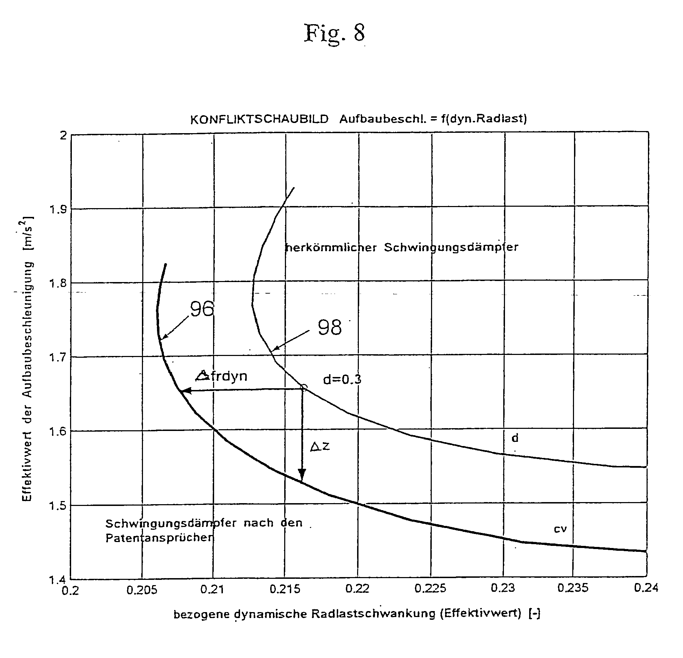

In Fig. 8 sind zwei Dämpferkennlinien 96, 98 im sogenannten Konfliktdiagramm zu erkennen. Sie bilden das Verhalten eines Schwingungsdämpfers ab, wobei die Massebeschleunigung in Abhängigkeit von der Radlastschwankung aufgetragen ist. Die Kennlinie 98 gibt die Kennlinie eines herkömmlichen Schwingungsdämpfers wieder, während die Kennlinie 96 das Verhalten eines Schwingungsdämpfers mit einem Bodenventil und/oder einen Kolbenventil nach der Erfindung wiedergibt. Man erkennt, daß der Auslegepunkt für die Auslegung des Schwingungsdämpfers deutlich niedriger liegt als beim Stand der Technik. Dies bedeutet, daß bei gleichen dynamischen Radlasten ein Komfortgewinn erhalten wird. Bei gleichem Komfort und gleicher Sicherheit wird eine Verringerung der dynamischen Radlasten erhalten. Schließlich kann auch eine Vergrößerung der Aufbaufederkonstanten erhalten werden bei gleichem Komfort und gleicher Sicherheit. Darüber hinaus ist eine bessere Längs- und Querdynamik möglich. Diese Eigenschaften werden, wie weiter oben schon erwähnt, mit geringen Steuermassen und demzufolge hoher Eigenfrequenz erhalten.

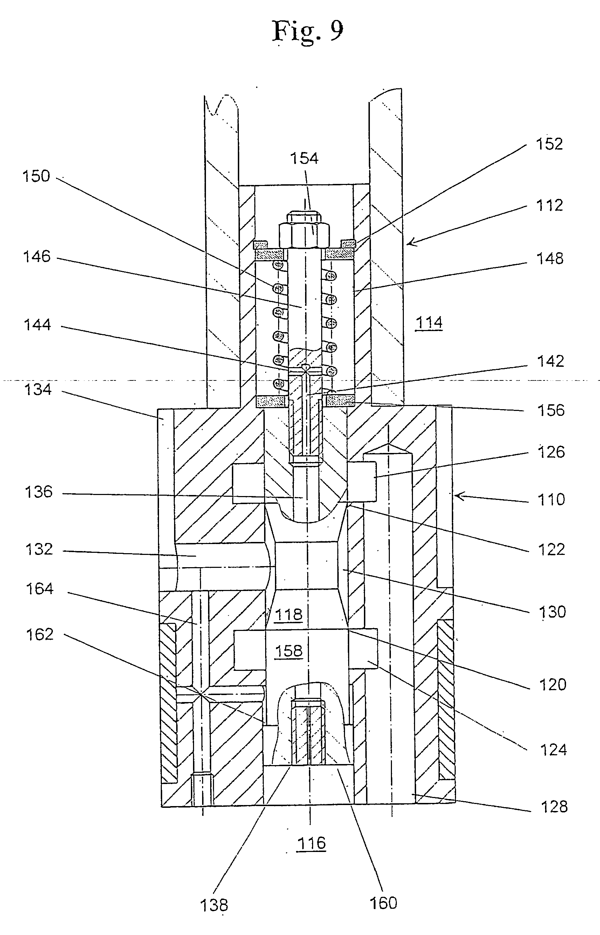

In Fig. 9 ist lediglich ein Beispiel für die Ausbildung eines erfindungsgemäßen Ventils in einem Dämpferkolben gezeigt.

Ein Dämpferkolben 110 eines nicht vollständig dargestellten Schwingungsdämpfers ist in einem nicht gezeigten Zylinderrohr geführt, wobei es sich bei dem Schwingungsdämpfer um einen Einrohr- oder einen Zweirohrschwingungsdämpfer handeln kann. Der Kolben 110 ist mit einer Kolbenstange 112 verbunden. Dadurch ergibt sich ein Ringraum 114, und unterhalb des Kolbens 110 befindet sich ein Kolbenraum 116. Die wahlweise Verbindung zwischen Kolbenraum 116 und Ringraum 114 erfolgt mittels eines Ventilschiebers 118, der in einer axialen Bohrung des Kolbens 110 verschiebbar gelagert ist. Steuerkanten 120 und 122 des Ringschiebers 118 wirken mit Kanten von Nuten 124 bzw. 126 zusammen. Die Nuten 124, 126 stehen in Verbindung mit mindestens einem achsparallelen Kanal 128, der ständig mit dem Kolbenraum 116 in Verbindung steht. Ein Ventilraum 130, der durch die Einschnürung des Ventilschiebers 118 gebildet ist, steht über eine Querbohrung 132 und eine achsparallele Längsausnehmung 134 ständig mit dem Ringraum 114 in Verbindung.

Der Ventilschieber 118 weist eine axiale Durchbohrung 136 auf, in der mit Hilfe eines Einsatzes 138 eine Drossel angeordnet ist. In das obere Ende der Durchbohrung 136 ist eine Stange 146 eingeschraubt, die eine axiale Blindbohrung 142 aufweist, die über radiale Bohrungen 144 mit einem Volumen 148 in der Kolbenstange 112 verbunden ist, das Bestandteil eines nicht gezeigten Druckspeichers Vₐ, Pₐ ist. Eine Feder 150 stützt sich zum einen über einen Federring 152 am Kolben bzw. an einer Mutter 154 auf der Stange 146 und zum anderen über eine Scheibe 156 auf dem Ventilschieber 118 ab.

Mit dem Ventilschieber 118 ist ein Stufenkolben 158 verbunden, der eine erste Wirkfläche 160 und eine entgegengesetzt gerichtete Wirkfläche 162 aufweist. Die Wirkfläche 160 ist ständig dem Druck im Kolbenraum 116 ausgesetzt und die Wirkfläche 162 ist über Bohrungen 164 ständig mit dem Ringraum 114 verbunden. Mithin wirkt auf den Stufenkolben 158 ständig die Differenz aus den Drücken von Ringraum 114 und Kolbenraum 116. Auf den Ventilschieber 118 wirkt auch der Druck des Speichers 148, indem er das rechte Stirnende des Ventilschiebers 118 beaufschlagt. Mithin ist die beschriebene im konstruktiven Detail gezeigte Ventilanordnung derjenigen gleich, wie sie in Fig. 1 schematisch dargestellt ist.

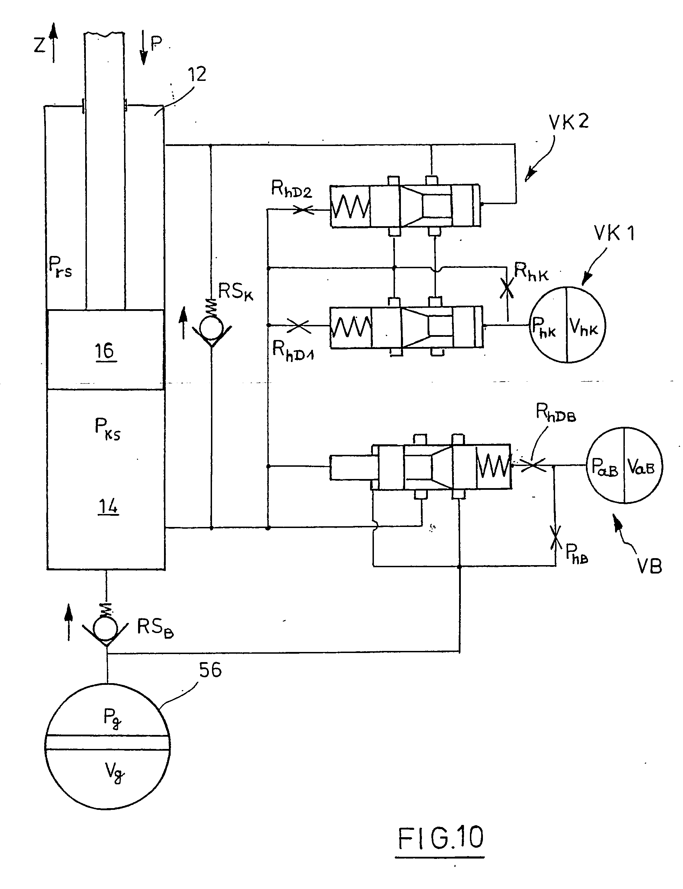

In Fig. 10 soll die Wirkungsweise der Erfindung anhand eines Zweirohrschwingungsdämpfers erläutert werden, wobei das Außenrohr nicht gezeigt ist, vielmehr durch den Speicher 56 ersetzt ist, wie er in Fig. 3 dargestellt ist. Er ist über ein Rückschlagventil RS_{B} mit dem Kolbenraum 14 verbunden. Der Kolbenraum ist außerdem über ein Rückschlagventil RS_{K} mit dem Ringraum 12 verbunden. Ein erstes Kolbenventil VK1 und ein zweites Kolbenventil VK2 sind parallel geschaltet. Die Wirkungsweise der Kolbenventile VK1 und VK2 entspricht derjenigen nach den Fig. 5 und 6. Auf die Kolbenanordnung des Kolbenventils VK2 wirkt der Differenzdruck zwischen Ringraum 12 und Kolbenraum 14 und somit die Dämpferkraft, während mit der Kolbenanordnung des Kolbenventils VK1 die Federkraft abgebildet ist. Dies wurde weiter oben bereits erläutert. Das Bodenventil V_{B} in Fig. 10 gleicht dem Aufbau der Ventilanordnung nach Fig. 4. Die rechte Wirkfläche ist mit dem Ausgleichsdruck P_{aB} beaufschlagt, während die rechte Wirkfläche der Steuerkolbenanordnung des Kolbenventils VK1 mit dem Ausgleichsdruck Pₐₖ beaufschlagt ist. Die linke Wirkfläche der Kolbenventile VK1 und VK2 sind über Blenden R_{hD1} und R_{hD2} an den Kolbenraum 14 angeschlossen. Der Ausgleichsdruck P_{aB} ist über eine Blende R_{hDB} aufgeschaltet.

Das Ausgleichsvolumen V_{g} und die Druckquelle B_{g} können im Ringraum zwischen Außen- und Innenrohr des nicht vollständig dargestellten Schwingungsdämpfers plaziert werden. Die Bodenventilgruppe besteht aus Rückschlagventil RS_{B} und Bodenventil V_{B}, und die Kolbenventilgruppe aus Rückschlagventil RS_{K} und den beiden Kolbenventilen VK1 und VK2.

Nachstehend wird die Wirkungsweise der Schaltungsanordnung nach Fig. 10 beschrieben. Zunächst wird die Druckstufe erläutert. Über RS_{K} kann das Medium mit geringem Widerstand vom Kolbenraum 14 in den Ringraum 12 strömen. Die Drücke Pₖₛ und Pᵣₛ sind annähernd gleich groß. Die Kolbenzylinderanordnung kann als Plunger-Zylinder angesehen werden. Die Dämpfung findet nur im Bodenventil VB statt.

In der Zugstufe Z kann das Fluid nahezu verlustlos vom Speicher 56 in den Kolbenraum 14 über das Rückschlagventil RS_{B} fließen. Die Drücke P_{g} und Pₖₛ sind nahezu gleich. Die Kolbenzylinderanordnung wirkt als Differentialzylinder, wobei die Zugdämpfung in den Kolbenventilen VK1 und VK2 stattfindet. Das durch VK1 strömende Fluid ist ein Maß für den Federkraftanteil und das durch VK2 strömende Fluid ein Maß für den Dämpfungskraftanteil. Die Abmessungen, Ventilfedern und Strömungsquerschnitte müssen naturgemäß aufeinander abgestimmt sein.

Die Anordnung nach Fig. 10 hat den Vorteil, daß die Ventile RS_{B}, RS_{K} und FK2 in bekannter Ausführung als Federplattenventile ausgeführt werden können und das Kolbenventil VK1 mit dem Ausgleichsvolumen im Inneren der hohlen Kolbenventilstange angeordnet werden kann, wie bereits anhand von Fig. 9 beschrieben.

Außerdem können die Kolbenventile VK1 und VK2 durch eine Ventilanordnung ersetzt werden, wie sie in Fig. 2 dargestellt und vorstehend beschrieben ist.

Zur Dämpfung der Bewegung der Steuerkolben der Kolbenventile VK1 und VK2 und V_{B} sind, wie bereits erwähnt, die Strömungswiderstände R_{hD1}, R_{hD2} und R_{hB} vorgesehen, die z.B. durch einfache Blenden dargestellt werden können. Strömungswiderstände R_{hD1} und/oder R_{hB} können auch veränderlich sein, wie weiter oben bereits beschrieben wurde.

Schließlich ist auch denkbar, das Bodenventil V_{B} aufzuteilen in zwei einzelne Ventile, wie dies auch in Verbindung mit Fig. 3 erläutert wurde.

## Patentansprüche

1. Steuerbares Kolbenventil für einen Schwingungsdämpfer in Kolbenzylinderanordnung mit den folgenden Merkmalen:
- ein den Durchströmquerschnitt steuerndes Kolbenventilglied (22, 22a) wird von einem als Differentialkolben ausgebildeten Steuerkolben (32) betätigt, dessen entgegengesetzt gerichtete Wirkflächen (34, 36) mit dem Druck von Kolben- und Ringraum (14, 12) des Zylinders beaufschlagt werden,
- der Steuerkolben (32) und/oder das Ventilglied wird entgegen der größeren Wirkfläche (34) zusätzlich mit dem Druck (Pₐ) einer Druckquelle belastet, die von der Kombination eines fluidischen Widerstands (Rₕₐ) und einer fluidischen Kapazität (44) gebildet und die vom Druck im Kolben- oder Ringraum (14, 12) des Zylinders gespeist ist.

2. Steuerbares Kolbenventil für einen Schwingungsdämpfer in Kolbenzylinderanordnung mit den folgenden Merkmalen:
- zwei jeweils einen Durchströmquerschnitt steuernde Kolbenventilglieder (84, 86), die jeweils von zwei Steuerkolbenabschnitten betätigbar sind,
- die Wirkflächen der Steuerkolbenabschnitte des ersten Kolbenventilglieds sind mit Druck (PKS) des Kolben- und Ringraum der Kolbenzylinderanordnung verbunden und
- die Wirkflächen der Steuerkolbenabschnitte des zweiten Kolbenventilglieds sind mit dem Druck des Kolbenraums und dem Druck (Pa) einer Druckquelle gegensinnig beaufschlagt, die von der Kombination eines fluidischen Widerstands (Rₕₐ) und einer fluidischen Kapazität gebildet und die vom Druck im Kolben- oder Ringraum (14, 12) der Kolbenzylinderanordnung gespeist ist.

3. Kolbenventil nach Anspruch 1, **dadurch gekennzeichnet, daß** parallel zum ersten Kolbenventilglied ein zweites Kolbenventilglied angeordnet ist, das ebenfalls von einem als Differentialkolben ausgebildeten Steuerkolben betätigt ist, dessen entgegengesetzte Wirkflächen mit dem Druck von Kolben- und Ringraum des Zylinders beaufschlagt werden.

4. Kolbenventil nach Anspruch 1, **dadurch gekennzeichnet, daß** es als Zweiwegeventil mit einem einteiligen Kolbenventilschieber (22) mit zwei Steuerflächen oder -kanten (28, 30) ausgebildet ist, wobei der Kolbenventilschieber (22) von dem Steuerkolben (32) und dem Druck (Pₐ) der Ausgleichsdruckquelle beaufschlagt ist.

5. Steuerbares Bodenventil für einen Schwingungsdämpfer im Kolbenzylinder- oder Plungerzylinderbauweise mit Speicher, **gekennzeichnet durch** folgende Merkmale:
- ein den Durchströmquerschnitt steuerndes Bodenventilglied (60, 60a) wird von einem als Stufenkolben ausgebildeten Steuerkolben betätigt,
- der Steuerkolben weist eine erste Wirkfläche (72, 72a) auf, die mit dem Druck im Kolbenraum oder im Plungerraum (54) beaufschlagt ist,
- der Stufenkolben weist eine zweite Wirkfläche (74, 74a) auf, die mit dem Druck des Speichers (56) beaufschlagt ist, wobei beide Wirkflächen gleichgerichtet sind,
- auf das Bodenventilglied (60, 60a) oder den Steuerkolben wirkt entgegen den Wirkflächen ein Druck (Pₐ) einer Druckquelle, die von der Kombination eines fluidischen Widerstands (Rₕₐ) und einer fluidischen Kapazität (80) gebildet und von dem Druck im Kolben- oder Plungerraum oder dem Druck des Speichers (56) gespeist ist.

6. Bodenventil nach Anspruch 5, **dadurch gekennzeichnet, daß** parallel zum ersten Bodenventilglied (60a) ein zweites Bodenventilglied angeordnet ist, das von einem Stufenkolben betätigt wird, dessen gleichgerichtete Wirkflächen mit dem Druck von Kolben- bzw. Plungerraum und Speicher beaufschlagt werden.

7. Bodenventil nach Anspruch 5, **dadurch gekennzeichnet, daß** es als Zweiwegeventil mit einem einteiligen Bodenventilschieber (60) mit zwei Steuerflächen oder -kanten (62, 64) ausgebildet ist, wobei der Bodenventilschieber (60) von dem Steuerkolben und der Druckquelle betätigt ist.

8. Ventil nach einem der Ansprüche 1 bis 7, **dadurch gekennzeichnet, daß** der Strömungsquerschnitt des fluidischen Widerstands veränderbar ist.

9. Ventil nach Anspruch 8, **dadurch gekennzeichnet, daß** der Strömungsquerschnitt in Abhängigkeit vom Druckstufen- oder Zugstufenbetrieb geändert wird.

10. Ventil nach Anspruch 8, **dadurch gekennzeichnet, daß** der Strömungsquerschnitt in Abhängigkeit vom Lenkeinschlag und/oder der Bremspedalbetätigung eines Fahrzeugs geändert wird.

11. Bodenventil nach einem der Ansprüche 8 bis 10, **dadurch gekennzeichnet, daß** der fluidische Widerstand ein Magnetventil (94, 92) aufweist.

12. Ventil nach Anspruch 11, **dadurch gekennzeichnet, daß** das Magnetventil (92, 94) parallel zu einer konstanten Blende (Rₕ) geschaltet ist.

13. Ventil nach Anspruch 5, **gekennzeichnet durch** seine Anwendung auf einen Zweirohrschwingungsdämpfer.

14. Ventil nach Anspruch 1 oder 5, **dadurch gekennzeichnet, daß** der Kolbenventilschieber in einem Dämpferkolben (110) verschiebbar gelagert ist und durch eine Federanordnung (150) in Neutralstellung gehalten ist, ein Durchgang (136) durch den Ventilschieber (118) mit Drossel (138) den fluidischen Widerstand bildet, der mit einem Speichervolumen (148) in der Kolbenstange (112) in Verbindung steht.

15. Steuerbares Kolbenventil nach einem der Ansprüche 1 bis 14, **dadurch gekennzeichnet, daß** Steuerkolben und Kolbenventil (22b) an einer einteilig ausgebildeten Kolbenanordnung ausgebildet sind, die in einer Bohrung von gleichem Durchmesser angeordnet ist, ein erster den Durchströmquerschnitt steuernder Kolbenabschnitt eine erste Wirkfläche (34) aufweist, eine entgegengesetzt gerichtete zweite Wirkfläche an einem Kolbenabschnitt (33b) ausgebildet ist, welche dem Druck Pₐ der Druckquelle (44) belastet ist, wobei in einem durch eine Einschnürung gebildeten Ventilraum (31b) der Ringraum (14) der Kolbenzylinderanordnung (10) verbunden ist und seinerseits über mindestens eine radiale Bohrung (200) in der Kolbenanordnung mit einer Innenbohrung (202) in Verbindung steht und in die Innenbohrung ein Kolbenabschnitt (204) hineinragt, der ortsfest in dem Teil der Bohrung angebracht ist, der dem Druck der Druckquelle (44) ausgesetzt ist.

## Claims

1. A controllable piston valve for a shock absorber having a piston cylinder structure, the piston valve comprising the following features:
- a piston valve member (22, 22a) which controls a throughflow area is actuated by a control piston (32) defined as differential piston which includes oppositely directed effective surfaces subject to the pressure of a piston and an annular chamber (14, 12) respectively of the piston cylinder structure,
- the control piston (32) and/or the valve member is additionally loaded with the pressure Pₐ of a pressure source opposite to the larger (34) of the effective surfaces, the pressure source being formed of a combination of a fluidic resistance Rₕₐ and a fluidic capacitance (44) and is supplied by the pressure in the piston or annular chamber (14, 12) respectively of the piston cylinder structure.

2. A controllable piston valve for a shock absorber having a piston cylinder structure, the piston valve comprising the following features:
- two piston valve members (84, 86) each controlling a throughflow area and each being actuable by two control piston portions,
- effective surfaces of the control piston portions of the first piston valve member are connected to the piston and the annular chamber of the piston cylinder structure and
- effective surfaces of the control piston portions of the second piston valve member are subject to the pressure of the piston chamber and to the pressure Pₐ of a pressure source on opposite sides, the pressure source being formed by the combination of a fluidic resistance Rₕₐ and a fluidic capacitance which is supplied by the pressure of the piston or the annular chamber (14, 12) respectively of the piston cylinder structure.

3. The piston valve of claim 1, wherein a second piston valve member is located parallel to the first piston valve member which is also actuated by a control piston being a differential piston the opposite effective surfaces thereof being subject to the pressure of the piston chamber and the annular chamber of the piston cylinder structure.

4. The piston valve of claim 1, wherein it is formed as two-way-valve having an integral piston valve spool (22) with two control surfaces or edges (28, 30) respectively, the valve spool (22) being actuated by the control piston (32) and the pressure Pₐ of the balancing pressure source.

5. A controllable bottom valve for a shock absorber having a piston cylinder structure or a plunger cylinder structure with a storage volume, respectively, the bottom valve having the following features:
- a bottom valve member (60, 60a) which controls a throughflow area and is actuated by a control piston defined by a differential piston,
- the control piston has a first effective surface (72, 72a) which is subject to the pressure in the piston or plunger chamber (54) of the piston or plunger cylinder structure,
- the differential piston has a second effective surface (74, 74a) which is subject to the pressure of the storage volume (56), the effective surfaces being oppositely directed,
- the pressure Pa of the pressure source acts on the bottom valve (60, 60a) or the control piston, respectively opposite to the effective surfaces, the pressure source including a combination of a fluidic resistance Rₕₐ and a fluidic capacitance (80) and being supplied by the pressure of the piston chamber or the plunger chamber, respectively, or the pressure of the storage volume (56).

6. The bottom valve of claim 5, wherein a second bottom valve member is arranged parallel to the first bottom valve member (60a), the second valve member is actuated by a differential piston having effective surfaces facing in the same direction and being subject to the pressure of the piston or plunger chamber, respectively, and the storage volume.

7. The bottom valve of claim 5, wherein it is formed as two-way-valve having an integral valve spool (60) with two control surfaces or edges, respectively (62, 64), the valve spool (60) being actuated by the control piston or the pressure source.

8. The valve of claims 1 to 7, wherein the effective area of the fluidic resistance is variable.

9. The valve of claim 8, wherein the flow area is changed in dependence of the compression or pulling performance of the shock absorber.

10. The valve of claim 8, wherein the flow area is changed in dependence of the steering angle and/or the actuation of a brake pedal of a vehicle.

11. The bottom valve of claims 1 to 10, wherein the fluidic resistance includes a solenoid valve (94, 92).

12. The valve of claim 11, wherein the solenoid valve (92, 94) is connected in parallel to an orifice Rₕₐ of constant area.

13. A valve of claim 5, **characterized by** its application to a two-tube shock absorber.

14. The valve of claim 1 or 5, wherein the piston valve spool is displaceably supported in an absorber piston (110) and held in a neutral position by a spring arrangement (150), and a passage (136) through a valve spool (118) with a restriction (138) forms the fluidic resistance which is in communication with a storage volume (148) in piston rod (112).

15. Controllable piston valve of one of the claims 1 to 14, wherein control piston and piston valve (22b) are formed at an integrally formed piston arrangement which is located in a bore of same diameter, a piston portion controlling a first throughflow area has a first effective surface (34), an oppositely directed second effective surface is formed at a piston portion (33b) which is loaded with pressure Pₐ of the pressure source (44), a valve chamber (31 b) formed through an outer constriction of the valve spool is connected to the annular chamber (14) of the piston cylinder structure and is in communication with an inner bore (202) through at least one radial bore (200) in the piston arrangement, and a piston portion (204) extends into the inner bore which is fixedly attached to the bore and subject to the pressure of the pressure source (44).

## Revendications

1. Soupape à piston commandable pour un amortisseur d'oscillations dans un système de cylindre à piston, avec les caractéristiques suivantes:
• un élément de soupape à piston (22, 22a) commandant la section d'écoulement est actionné par un piston de commande (32) réalisé comme un piston différentiel, dont les surfaces actives opposées (34, 36) sont soumises à la pression de la chambre du piston et de la chambre annulaire (14, 12) du cylindre,
• le piston de commande (32) et/ou l'élément de soupape est soumis en plus à la pression (Pₐ) d'une source de pression contre la surface active la plus grande (34), ladite source de pression étant formée par la combinaison d'une résistance fluidique (Rₕₐ) et d'un condensateur fluidique (44) et étant alimentée par la pression présente dans la chambre du piston ou dans la chambre annulaire (14, 12) du cylindre.

2. Soupape à piston commandable pour un amortisseur d'oscillations dans un système de cylindre à piston, avec les caractéristiques suivantes:
• deux éléments de soupape à piston (84, 86), chacun commandant une section d'écoulement et chacun étant actionnable par deux sections du piston de commande,
• les surfaces actives des sections du piston du premier élément de soupape à piston sont raccordées à la pression (PKS) de la chambre du piston et de la chambre annulaire du système de cylindre à piston, et
• les surfaces actives des sections du piston de commande du deuxième élément de soupape à piston sont soumises à la pression de la chambre du piston et à la pression (Pa) d'une source de pression dans des sens opposés, ladite source de pression étant formée par la combinaison d'une résistance fluidique (Rₕₐ) et d'un condensateur fluidique et alimentée par la pression présente dans la chambre du piston ou dans la chambre annulaire (14, 12) du système de cylindre à piston.

3. Soupape à piston selon la revendication 1, **caractérisée en ce que** un deuxième élément de soupape à piston est disposé en parallèle au premier élément de soupape à piston, ledit deuxième élément étant aussi actionné par un piston de commande réalisé comme un piston différentiel, dont les surfaces actives opposées sont soumises à la pression de la chambre du piston et de la chambre annulaire du cylindre.

4. Soupape à piston selon la revendication 1, **caractérisée en ce qu'**elle est réalisée comme une soupape à deux voies, avec un tiroir de soupape à piston (22) en une partie avec deux surfaces ou arêtes de commande (28, 30), le tiroir de soupape à piston (22) étant soumis au piston de commande (32) et à la pression (Pₐ) de la source de pression de compensation.

5. Soupape de vidange commandable pour un amortisseur d'oscillations dans le système cylindre à piston ou cylindre à plongeur avec réservoir, **caractérisée par** les caractéristiques suivantes:
• un élément de soupape de vidange (60, 60a) commandant la section d'écoulement est actionné par un piston de commande (32) réalisé comme un piston à gradins,
• le piston de commande présente une première surface active (72, 72a), qui est soumise à la pression dans la chambre de piston ou dans la chambre de plongeur (54),
• le piston à gradins présente une deuxième surface active (74, 74a), qui est soumise à la pression du réservoir (56), les deux surfaces actives étant dirigées dans le même sens,
• une pression (Pₐ) d'une source de pression agit dans le sens inverse aux surfaces actives sur l'élément de soupape de vidange (60, 60a) ou sur le piston de commande, ladite source de pression étant formée par la combinaison d'une résistance fluidique (Rₕₐ) et d'un condensateur fluidique (80) et étant alimentée par la pression présente dans la chambre du piston ou du plongeur ou par la pression du réservoir (56).

6. Soupape de vidange selon la revendication 5, **caractérisée en ce que** un deuxième élément de soupape de vidange est disposé en parallèle au premier élément de soupape de vidange (60a), ledit deuxième élément étant actionné par un piston à gradins, dont les surfaces actives dirigées dans la même direction sont soumises à la pression de la chambre du piston ou resp. du plongeur et du réservoir.

7. Soupape de vidange selon la revendication 5, **caractérisée en ce qu'**elle est réalisée comme une soupape à deux voies, avec un tiroir de soupape de vidange (60) en une partie et avec deux surfaces ou arêtes de commande (62, 64), le tiroir de soupape de vidange (60) étant actionné par le piston de commande et la source de pression.

8. Soupape selon l'une quelconque des revendications 1 à 7, **caractérisée en ce que** la section d'écoulement de la résistance fluidique est changeable.

9. Soupape selon la revendication 8, **caractérisée en ce que** la section d'écoulement est changée en fonction de la marche en compression ou en extension.

10. Soupape selon la revendication 8, **caractérisée en ce que** la section d'écoulement est changée en fonction du rayon de braquage et/ou de l'actionnement de la pédale de frein d'un véhicule.

11. Soupape de vidange selon l'une quelconque des revendications 8 à 10, **caractérisée en ce que** la résistance fluidique présente une vanne magnétique (94, 92).

12. Soupape selon la revendication 11, **caractérisée en ce que** la vanne magnétique (94, 92) est couplée en parallèle à un diaphragme (Rₕ) constant.

13. Soupape selon la revendication 5, **caractérisée par** son application à un amortisseur d'oscillations à deux tubes.

14. Soupape selon la revendication 1 ou 5, **caractérisée en ce que** le tiroir de soupape à piston est logé mobile dans un piston d'amortisseur (110) et est tenu dans la position neutre par un système de ressort (150), un passage (136) à travers le tiroir de soupape (118) avec étrangleur (138) formant la résistance fluidique qui est en communication avec un volume de réservoir (148) dans la tige de piston (112).

15. Soupape à piston commandable selon l'une quelconque des revendications 1 à 14, **caractérisée en ce que** le piston de commande et la soupape à piston (22b) sont formés dans un système de piston formé en une pièce, qui est arrangé dans un perçage du même diamètre, une première partie du piston commandant la section d'écoulement présente une première surface active (34), une deuxième surface active dirigée dans le sens inverse est formée sur une partie (33b) du piston et est chargée par la pression de la source de pression (44), la chambre annulaire (14) du système de cylindre à piston (10) étant connecté dans une chambre de soupape (31b) formée par constriction, et ladite chambre annulaire est elle-même en communication avec un perçage intérieur (202) à travers au moins un perçage radial (200) dans le système de piston, et une partie du piston (204) avance dans le perçage intérieur qui est monté de façon stationnaire dans cette partie du perçage qui est soumise à la pression de la source de pression (44).
